# EUROPÄISCHE PATENTANMELDUNG

(11) **EP 4 600 302 A1**
(43) Veröffentlichungstag der Anmeldung: **13.08.2025**
(21) Anmeldenummer: 24155908.7
(22) Anmeldetag: 06.02.2024
(51) Int. Cl.: C08L 67/02, C08L 67/04, C08L 1/02, C08L 3/02, C08K 7/22, C08K 3/32, C08K 3/04, C08K 3/36

(54) **BIOLOGISCH ABBAUBARES POLYMERMATERIAL**

(71) Anmelder: BIOAFFIN Handels GmbH, 3335 Weyer (AT); E.L.T. Holding GmbH, 8240 Friedberg (AT)
(72) Erfinder: Rametsteiner, Karl, 4020 Linz (AT); Zitz, Friedrich, 8240 Friedberg (AT); Steineck, Klaus, 3335 Weyer (AT)
(74) Vertreter: Schwarz & Partner Patentanwälte GmbH

(57) **Zusammenfassung**

Die vorliegende Patentanmeldung betrifft ein biologisch abbaubares Polymermaterial umfassend eine biologisch abbaubare Polymermatrix, wobei die Polymermatrix mindestens einen nanoporösen Füllstoff und mindestens einen weiteren Füllstoff umfasst, wobei der mindestens eine weitere Füllstoff biologisch abbaubar und/oder wasserlöslich ist.

## Beschreibung

### TECHNISCHES GEBIET

Die vorliegende Erfindung betrifft das Gebiet der biologisch abbaubaren Polymermaterialien.

### HINTERGRUND DER ERFINDUNG

Gegenwärtig werden zwei, einander ergänzende, Trends zur Bewältigung der prognostizierten Umweltkrise beobachtet.

Es ist bekannt, dass die fossilen Rohstoffquellen, wie Erdöl und Erdgas, nicht unerschöpflich sind, sondern in absehbarer Zeit verknappen und/oder versiegen werden. Damit besteht die Gefahr, dass wesentliche Produkte und Verfahren, die unsere Kultur und unseren Wohlstand mitbegründen, nicht mehr (ausreichend) zur Verfügung stehen werden. Dazu gehören insbesondere polymere Werkstoffe und die daraus hergestellten Anwendungsprodukte. Daher besteht Bedarf an alternativen Bezugsquellen auf Basis nachwachsender Rohstoffe, zur Deckung des Kohlenstoffanteils in vielen Polymeren. Mit der Verwendung nachwachsender Rohstoffe wird gleichzeitig der CO₂ Fußabdruck, also der Ausstoß von CO₂ aus fossilen Quellen, minimiert bzw. verhindert.

Neben der begrüßungswerten Tendenz zum Recyclen, welches optimal bei thermoplastischen Polymeren zum Einsatz kommt, besteht eine weitere Forderung dahingehend, Polymere, die sich aus unterschiedlichen Gründen (mangelnde Beständigkeit bei Wiederverwertung, fehlende Logistik bei der Einsammlung, extreme Verschmutzung, deutlicher Abbau während der Nutzungsdauer usw.) dem Recyclingprozess entziehen, nicht nur, wie derzeit in den meisten Fällen praktiziert, energetisch (durch Verbrennung) zu nutzen, sondern biologisch abbaubar zu gestalten. Aus ökologischer Sicht ergeben sich aus einer Kompostierbarkeit wesentliche Vorteile:
- Anwendbarkeit in allen geographischen Gebieten.
- Neutralisierung des CO₂ Fußabdruckes bei Verwendung von nachwachsenden Rohstoffen bei den ursprünglichen Produktionsprozessen.
- In der landwirtschaftlichen Praxis (inkl. Fischerei und Waldwirtschaft) gibt es jedoch Anwendungen, bei denen die Kunststoffe zwar eigentlich nicht auf dem Boden verbleiben sollen, in der Praxis aber nachweislich nicht wieder (vollständig) eingeholt werden. Beispiele sind Fragmente von Mulchfolien, Umhüllungen für Heu- oder Silageballen, Fegerschutzabdeckungen usw.. Besonders oft handelt es sich um kleinteilige Pflanzhilfen, die zu klein oder zu sehr mit der Erde verbunden sind wie Pflanzenbefestigungs-Clips, Bänder, Schnüre oder Erdnägel, Pflanzenaufzuchtbehälter, fragile Stützelemente usw..
- Sonderfälle, wie Urnen, aber auch dünnwandige Polymersärge oder Gewebe, wie bei bestimmten Bestattungsriten zwingend vorgesehen, können somit aus biologisch gut abbaubaren Polymeren gefertigt werden.
- Auch gibt es Anwendungen von Kunststoffen, bei denen diese ganz bewusst in den Boden eingetragen werden. Das betrifft mit Kunststoffbeschichtungen umhüllte Düngemittel, die eine kontrollierte Nährstoffabgabe ermöglichen, oder umhülltes Saatgut. Hier können bioabbaubare Kunststoffe mitunter eine Lösung sein, wenn sie den jeweiligen Abbaubedingungen vor Ort (Temperatur, Feuchtigkeit usw.) entsprechen.

Es ist somit eine Aufgabe der vorliegenden Erfindung Polymermaterialien bzw. (Nutz-)Gegenstände aus diesen Polymermaterialien bereitzustellen, die biologisch rasch und idealerweise zeitlich gesteuert abgebaut bzw. kompostiert werden können.

### ZUSAMMENFASSUNG DER ERFINDUNG

Die vorliegende Erfindung betrifft ein biologisch abbaubares Polymermaterial umfassend eine biologisch abbaubare Polymermatrix, wobei die Polymermatrix mindestens einen nanoporösen Füllstoff und mindestens einen weiteren Füllstoff umfasst, wobei der mindestens eine weitere Füllstoff biologisch abbaubar und/oder wasserlöslich ist.

Die grundsätzlich biologisch abbaubare Polymermatrix übernimmt über die prognostizierte und erforderliche Gebrauchsdauer des daraus gefertigten Gegenstandes (Produktes), die Hauptlast der erforderlichen mechanischen Eigenschaften, wie Härte, Elastizität, Steifheit, Zugfestigkeit, Dehnung und dgl. Diese Eigenschaften können grundsätzlich durch Füllstoffe beeinflusst werden. Gleichzeitig soll nach dem Gebrauch, ein, allenfalls vorab einsetzender, biologischer Abbau, forciert werden.

Nanoporöse Füllstoffe stellen dafür eine sehr große inhärente Oberfläche bereit, die während des Gebrauches jedoch nur wenig im biologischen Abbauprozess wirksam ist, da von der Polymermatrix vollflächig umschlossen. Wird jedoch in die Polymermatrix mindestens ein weiterer Füllstoff eingebracht, der vorzugsweise im Vergleich zur Polymermatrix besser, rascher, leichter biologisch abbaubar oder wasserlöslich ist, so ist es gezielt möglich, von außen her, größere Poren (etwa Faktor 1000= nm/pm) zu generieren. Die Größe dieser durch Abbau und/oder durch Herauslösen des mindestens einen weiteren Hilfsstoff neu gebildeten Poren entspricht weitgehend dem Partikeldurchmesser bzw. der Fasergröße des mindestens einen weiteren Füllstoffes.

Die damit von außen her rasch und stark vergrößerte Oberfläche ermöglicht nunmehr, nach Gebrauch in einer geeigneten neuen Umgebung (z.B. Erdreich, Kompost), durch die Möglichkeit eines großflächigen Wasseraustausches und damit einhergehend, der biologischen Besiedelung vorwiegend durch Bakterien und Pilze, eine signifikante Steigerung der Abbaurate der Polymermatrix und somit des Polymermaterials.

Durch das Vorsehen von biologisch abbaubaren und/oder wasserlöslichen Füllstoffen in einer Polymermatrix ist es möglich die normgeforderten Abbauraten von Polymeren bei gleicher Zeit (z.B 60 >8O%) erhöht werden. Zudem kann die normgeforderte Abbaurate in kürzerer Zeit (z.B. 60 anstelle von 90 Tagen) erreicht werden. Das erfindungsgemäße Polymermaterial hebt die Kompostierfähigkeit in der praktischen Anwendung (z.B. in Haushalten, landwirtschaftlichen Betrieben).

Biologisch abbaubare Polymere sind zumeist hydrophob und können dementsprechend kein Wasser aufnehmen. Derartige Polymere können bestenfalls nur von den (üblicherweise sehr glatten) Oberflächen aus, von Mikroorganismen besiedelt werden. Das Vordringen in innere Strukturen der Polymere ist also erschwert und erfordert, selbst bei sonst optimalen Bedingungen, unverhältnismäßig viel Zeit. Wie oben bereits ausgeführt, ermöglicht das Vorhandensein von biologisch abbaubaren und/oder wasserlöslichen Füllstoffen in den Polymeren bzw. im erfindungsgemäßen Polymermaterial, dass durch die gebildeten Hohlräume u.a. Mikroorganismen in das Polymermaterial eindringen können. Diese Mikroorganismen sind dort in der Lage, das Polymer oder die Polymere der Polymermatrix abzubauen.

Es wurde gefunden, dass die Implementierung von Porenstrukturen (z.B. im Mikro- und/oder Nanobereich) einen bedeutend forcierten Abbau der biologisch abbaubaren Polymermatrix ermöglicht. Erreicht wird dies durch nanoporöse Füllstoffe, wie z.B. Mineralien und Silica, Aktivkohle, Ruß und Zeolithe. Die nanoporösen Füllstoffe dienen als Wasserspeicher und sind auch der Besiedelung mit Bakterien zugängig. Zudem können nanoporöse Füllstoffe auf Mineralbasis, beispielsweise, katalytische und Ionentauscher-Eigenschaften aufweisen.

Ein weiterer Aspekt der vorliegenden Erfindung betrifft ein Verfahren zur Herstellung eines biologisch abbaubaren Polymermaterials umfassend die Schritte des Vermengens mindestens eines nanoporösen Füllstoffs und mindestens eines weiteren biologisch abbaubar und/oder wasserlöslich Füllstoffs, wie hier definiert, mit einer Polymermatrix gemäß der vorliegenden Erfindung.

Mit dem erfindungsgemäßen Verfahren ist es möglich ein Polymermaterial herzustellen, welches biologisch abbaubar ist.

Ein noch weiterer Aspekt der vorliegenden Erfindung betrifft einen Gegenstand umfassend oder bestehend aus einem Polymermaterial gemäß der vorliegenden Erfindung.

Das erfindungsgemäße Polymermaterial kann Teil von Gegenständen sein oder die Gegenstände bestehen aus dem erfindungsgemäßen Polymermaterial.

### BESCHREIBUNG DER AUSFÜHRUNGSFORMEN

"Biologisch abbaubares Polymermaterial" umfasst eine biologisch abbaubare Polymermatrix (d.h. ein biologisch abbaubares Polymer), wobei "biologisch abbaubar" Prozesse umfasst, mit denen Mikroorganismen (aus der Umwelt oder zugesetzt) die Polymermatrix bzw. das Polymer in Verbindungen umwandelt, die in der Natur vorkommen, wie z.B. Wasser, Kohlendioxid und/oder Methan.

Um die biologische Abbaubarkeit bzw. Kompostierbarkeit vergleichend verifizieren zu können, gibt es internationale anerkannte Bewertungskriterien, wie z.B. EN 13 432:2000, EN 17 033, DIN EN ISO: 20.200, DIN EN L4995 2AO7, ISO 17088.2008, ASTM G22, ASTM D 5400 und OECD 301B, 301D, 301F.

Eine "Polymermatrix", wie hier verwendet, umfasst mindestens ein biologisch abbaubares Polymer oder kann aus mindestens einem biologisch abbaubaren Polymer bestehen. Je nach Anforderungen an das erfindungsgemäße Polymermaterial umfasst die Polymermatrix mindestens ein, zwei, drei, vier, fünf oder zehn verschiedene Arten von biologisch abbaubaren Polymeren.

"Nanoporöse Füllstoffe" in Polymeren sind nanostrukturierte, poröse Materialien, vorzugsweise in Form von Partikeln, und können in Polymeren verwendet werden, um deren Eigenschaften zu modifizieren. Diese Füllstoffe können den Polymermaterialien außergewöhnliche mechanische, thermische, elektrische und optische Eigenschaften verleihen.

Die Nanoporosität der Füllstoffe wird durch eine hohe Anzahl von winzigen Poren in ihrer Struktur erreicht, die Größenordnungen im Bereich von Nanometern haben. Diese Poren ermöglichen eine größere Oberfläche, die es den Füllstoffen ermöglicht, mit dem Polymer zu interagieren und Wechselwirkungen einzugehen. Dies führt zu einer verbesserten Verbindung zwischen dem Füllstoff und dem Polymer, was zu veränderten mechanischen Eigenschaften des Polymermaterial in Bezug auf Festigkeit, Steifigkeit und Härte führt.

Darüber hinaus haben nanoporöse Füllstoffe auch eine grö-ßere Reaktivität aufgrund ihrer großen Oberfläche, was es ihnen ermöglicht, chemische Reaktionen mit dem Polymer einzugehen. Darüber hinaus kann die nanoporöse Struktur auch als Reservoir für Additive dienen, die dem Polymer zugesetzt werden, um spezifische Eigenschaften zu verleihen.

Nanoporöse Füllstoffe können auch die thermischen Eigenschaften von Polymeren verändern. Durch ihre hohe Oberfläche und Porenstruktur können sie als Wärmeisolator dienen, was vor allem bei der Kompostierung vorteilhaft ist.

Gemäß einer bevorzugten Ausführungsform der vorliegenden Erfindung liegt der mindestens eine nanoporöse Füllstoff als Partikel vor.

Gemäß einer weiteren bevorzugten Ausführungsform der vorliegenden Erfindung der mindestens eine nanoporöse Füllstoff einen D90-Wert von 2 bis 40 µm, vorzugsweise von 2 bis 25 µm, noch mehr bevorzugt von 2 bis 20 µm, noch mehr bevorzugt von 5 bis 20 µm, aufweist.

Der D90-Wert für Partikel ist ein Begriff, der in der Partikelanalyse verwendet wird und den Durchmesser des Partikels angibt, bei dem 90% der Partikel kleiner als der angegebene Durchmesserbereich sind. Dieser Wert ist nützlich, um die Grö-ßenverteilung von Partikeln in einer Probe zu charakterisieren.

Die Bestimmung des D90-Werts für Partikel erfolgt vorzugsweise nach bestimmten normierten Verfahren wie Laserbeugungsverfahren oder Siebanalyse.

Die DIN EN ISO 13320-1:2009 legt beispielsweise die Grundlagen der Laserbeugungsmethoden zur Messung der Partikelgröße fest. Eine andere Methode zur Bestimmung des D90-Werts ist die Siebanalyse (siehe DIN EN ISO 3310-1:2000).

Gemäß einer besonders bevorzugten Ausführungsform der vorliegenden Erfindung der mindestens eine nanoporöse Füllstoff eine Porengröße von 0,2 bis 20 nm, vorzugsweise von 0,3 bis 10 nm, noch mehr bevorzugt von 0,4 bis 5 nm, aufweist.

Die Porengröße bei nanoporösen Füllstoffpartikeln bezieht sich auf die Abmessungen der Hohlräume oder Aussparungen innerhalb dieser Partikel. Die Porengröße kann auf verschiedene Arten gemessen und bestimmt werden.

Die DIN-EN ISO 9277:2010 ist eine Norm, die die Bestimmung der spezifischen Oberfläche von porösen Werkstoffen durch Stickstoffadsorption beschreibt. Diese Methode ermöglicht die Ermittlung der Porengröße und der Gesamtporenvolumina von Partikeln. Sie basiert auf dem Prinzip der Adsorption von Stickstoffgas an der Oberfläche von porösen Materialien, wobei die Adsorption im Verhältnis zur Größe der Hohlräume erfolgt.

Ein weiterer Ansatz zur Bestimmung der Porengröße ist die Verwendung von Porengrößenverteilungen, die den Anteil der Poren in verschiedenen Größenbereichen darstellt. Die DIN 66133-1:1976-06 beschreibt die Bestimmung der Porengrößenverteilung von Pulvern durch Carboxymethylzellulose-BT-Methode. Diese Methode basiert auf der Verwendung eines speziellen Farbstoffs, der selektiv an die Oberfläche der Partikel adsorbiert. Durch die digitale Bildanalyse kann die Porengrößenverteilung ermittelt werden.

Ein weiteres Beispiel ist die ISO 13317-1:2014, welche die Bestimmung der Partikelgrößenverteilung von Pulvern durch Laserbeugung beschreibt. Obwohl dies primär eine Methode zur Bestimmung der Partikelgröße ist, kann sie auch verwendet werden, um Informationen über die Porengröße zu erhalten. Eine Veränderung der Porengröße führt zu einer Veränderung der Lichtstreuung, die durch die Laserbeugung gemessen werden kann.

Gemäß einer bevorzugten Ausführungsform der vorliegenden Erfindung der mindestens eine nanoporöse Füllstoff ein Mineral, vorzugsweise ein Zeolith, insbesondere ein natürlicher Zeolith, gefällte Kieselsäure, Aktivkohle oder eine metallorganische Gerüstverbindung ist, wobei besonders bevorzugt Mineralpartikel und noch mehr bevorzugt Zeolithpartikel als nanoporöse Füllstoffe eingesetzt werden.

Zeolithpartikel werden besonders bevorzugt eingesetzt, da diese die Steifigkeit und Festigkeit von Polymeren erhöhen können, was zu einer verbesserten mechanischen Belastbarkeit führt. Dies ist besonders wichtig für Anwendungen, die hohe mechanische Beanspruchungen erfordern. Durch die Zugabe von Zeolith als Füllstoff kann die Wärmeverformungstemperatur eines Polymers erhöht werden. Dies bedeutet, dass das Polymer bei höheren Temperaturen seine Form beibehalten kann. Zeolith kann auch dazu beitragen, die Dimensionsstabilität von Polymeren zu verbessern. Das bedeutet, dass das Polymer weniger anfällig für Schrumpfen oder Verformen ist, insbesondere bei Änderungen von Temperatur und Feuchtigkeit.

Metallorganische Gerüstverbindungen, auch bekannt als metallorganische Rahmenverbindungen (MOFs) oder Koordinationspolymere, sind Verbindungen, die aus Übergangsmetallionen oder Metallclustern bestehen, die durch organische Liganden miteinander verbunden sind. Diese Gerüstverbindungen zeichnen sich durch ihre hohe Oberfläche und Porenstruktur aus. MOFs können als Füllstoffe in Polymeren eingesetzt. MOFs, die eine zeolithähnliche Struktur aufweisen, können als Füllstoffe für Polymere dienen. Sie bieten eine große Oberfläche und Porenstruktur, die zur Aufnahme von Gasen und anderen Molekülen genutzt werden kann. Pillared MOFs zeichnen sich durch ihre Säulenstruktur aus, die die Poren des Materials offen hält und die Adsorptionskapazität verbessert. Hierarchische MOFs können die mechanischen Eigenschaften und die Adsorptionskapazität von Polymeren verbessern.

Besonders bevorzugt werden MOFs eingesetzt, die Fe(II) und/oder Fe(III) enthalten. Beispiele sind Fe-BDC (Fe(II)-1,4-Benzoldicarboxylat), MIL-100 (Fe(III)-Trimesat), Fe-MOF-74 (Fe(II)), FeTDP (Fe(III)-Tetra(4-carboxyphenyl)porphyrinat), FeTCPP (Fe(III)-Tetra(4-carboxyphenyl)porphyrin), Fe-bpy-MOF, MIL-88B (Fe(III)-Bipyridyl), Fe-tpy-MOF (Fe(II)-Terpyridin) und MIL-101 (Fe(III)-Terpyridin).

Gemäß einer weiteren bevorzugten Ausführungsform der vorliegenden Erfindung umfasst oder besteht der Zeolith aus Klinoptilolith.

Gemäß einer bevorzugten Ausführungsform der vorliegenden Erfindung umfasst das Polymermaterial 2 bis 30 Gew%, vorzugsweise 2 bis 25 Gew%, noch mehr bevorzugt 2 bis 20 Gew%, noch mehr bevorzugt 2 bis 15 Gew%, noch mehr bevorzugt 2 bis 10 Gew%, noch mehr bevorzugt 3 bis 8 Gew%, des mindestens einen nanoporösen Füllstoff.

Gemäß einer besonders bevorzugten Ausführungsform der vorliegenden Erfindung liegt der mindestens eine weitere Füllstoff als Partikel und/oder als Faser vor.

In einer besonderen Ausführungsform werden nicht (sphärische) Partikel eingesetzt, sondern feinteilige Faserstoffe, beispielsweise als Mahlgut von Pflanzenteilen. Damit werden nicht sphärische Poren, sondern feine offene Kanäle innerhalb des Polymermaterials im Zuge des Abbaus generiert, die besonders vorteilhafte Reaktionen ermöglichen. Darüber hinaus können faserige Füllstoffe als Verstärkungsmittel in Gebrauchsgegenständen fungieren (z.B. in Bänder, Befestigungen, Aufbindestäbe in der Landwirtschaft usw.).

Gemäß einer bevorzugten Ausführungsform der vorliegenden Erfindung der mindestens eine weitere Füllstoff als Partikel vorliegt und einen D90-Wert von 5 bis 100 µm, vorzugsweise von 10 bis 100 µm, noch mehr bevorzugt von 10 bis 50 µm, noch mehr bevorzugt von 5 bis 30 µm, aufweist.

Gemäß einer bevorzugten Ausführungsform der vorliegenden Erfindung der mindestens eine weitere Füllstoff, der biologisch abbaubar und/oder wasserlöslich ist, ausgewählt ist aus der Gruppe der Kohlenhydrate, vorzugsweise ein Monosaccharid, ein Disaccharid, ein Polysaccharid oder ein Derivat davon ist.

Besonders bevorzugte Monosaccharide sind Glucose, Fruktose und Galaktose. Besonders bevorzugte Disaccharide sind Saccharose, Laktose und Maltose. Besonders bevorzugte Polysaccharide sind Cellulose, Stärke, Chitin und Pektin.

Kohlenhydrate werden besonders bevorzugt eingesetzt, da diese relativ temperaturstabil sind und somit mit der Polymermatrix gut verarbeitet (z.B. extrudiert) werden können. Zudem sind Mono- und Disaccharide und Polysaccharide gut biologisch abbaubar. Mono- und Disaccharide weisen aufgrund der Molekülgröße im Gegensatz zu den Polysacchariden eine gute Wasserlöslichkeit auf. Daher eignen sich diese Kohlenhydrate besonders gut als Füllstoffe im erfindungsgemäßen Polymermaterial zum Erzeugen von Hohlräumen im Polymer vor bzw. während des biologischen Abbaus.

Besonders bevorzugt sind Derivate von Cellulose, Stärke, Chitin und/oder Pektin. Bevorzugte Cellulosederivate sind Celluloseether wie Carboxymethylcellulose (CMC) und Hydroxypropylcellulose (HPC). Bevorzugte Stärkederivate sind Stärkeester und Stärkeether. Ein bevorzugtes Chitinderivat ist Chitosan. Bevorzugte Pektinderivate umfassen Pektinester.

Gemäß einer bevorzugten Ausführungsform der vorliegenden Erfindung ist der mindestens eine weitere Füllstoff, der wasserlöslich ist, ein Phosphat oder ein Sulfat.

Der mindestens eine weitere wasserlösliche Füllstoff kann ein Salz, vorzugsweise ein reaktives Salz, sein, welches gegebenenfalls mit Hydroxylgruppen anderer Verbindungen, wie z.B. Kohlenhydrate, reagieren kann. Besonders bevorzugt werden daher Phosphate und/oder Sulfate eingesetzt. Insbesondere Phosphate sind besonders bevorzugt, da diese zusätzlich auch als Dünger wirksam sind.

Gemäß einer bevorzugten Ausführungsform der vorliegenden Erfindung ist das Phosphat ein Salz, vorzugsweise ein Natriumphosphat, ein Kaliumphosphat oder ein Ammoniumphosphat.

Bevorzugte Sulfate sind Natriumsulfat, Kaliumsulfat oder Magnesiumsulfat.

Durch die Wahl der abbaubaren bzw. wasserlöslichen Füllstoffe lässt sich u.a. die Abbaugeschwindigkeit des Polymermaterials bzw. der Polymermatrix steuern. Je rascher innerhalb des Polymermaterials durch Abbau bzw. Herauslösen des mindestens einen weiteren Füllstoffs Hohlräume gebildet werden, desto rascher können beispielsweise Mikroorganismen bzw. Enzyme in die Nähe des abzubauenden Polymers gelangen. Daher kann durch Auswahl des mindestens einen weiteren Füllmaterials die gewünschte Abbaugeschwindigkeit beeinflusst werden. Deshalb ist es besonders bevorzugt mehrere biologisch abbaubare und/oder wasserlösliche Füllstoffe zu kombinieren.

Gemäß einer bevorzugten Ausführungsform der vorliegenden Erfindung umfasst das Polymermaterial 1 bis 20 Gew%, vorzugsweise 1 bis 15 Gew%, noch mehr bevorzugt 1 bis 10 Gew%, noch mehr bevorzugt 1 bis 8 Gew%, noch mehr bevorzugt 2 bis 8 Gew%, des mindestens einen weiteren Füllstoffs umfasst.

Gemäß einer bevorzugten Ausführungsform der vorliegenden Erfindung die biologisch abbaubare Polymermatrix ausgewählt ist aus der Gruppe bestehend aus thermoplastischer Stärke, Polymilchsäure, Polybutylsuccinat, Polyhydroxyalkanoate, Poly(butylenadipat-co-terephthalat), Polycaprolactone, Polyalkyenglycole und Copolymeren davon.

Biologisch abbaubare Polymere (das ist die biologisch abbaubare Polymermatrix) sind dem Fachmann hinreichend bekannt. Biologisch abbaubare Polymere sind Materialien, die von Mikroorganismen oder Enzymen in der Umwelt abgebaut werden können. Im Gegensatz zu herkömmlichen Polymeren, die sehr langsam oder gar nicht abgebaut werden, bieten biologisch abbaubare Polymere eine vielversprechende Lösung für das Problem der Plastikverschmutzung.

Es gibt verschiedene Arten von biologisch abbaubaren Polymeren, die auf natürlichen Rohstoffen oder synthetisch hergestellt werden können. Ein bekanntes Beispiel für ein natürliches biologisch abbaubares Polymer ist Stärke. Stärke wird aus Pflanzen gewonnen und kann in Wasser löslich oder in Form von Granulaten vorliegen. Es wird häufig für Verpackungsanwendungen verwendet, da es biologisch abbaubar und kostengünstig ist.

Stärke kann von Pflanzen gewonnen und zu thermoplastischer Stärke verarbeitet werden wie dies in der WO 2021/005190, beispielsweise, beschrieben ist. Thermoplastische Stärke ist ein Stärkeprodukt, das durch partielles oder vollständiges Gelatinieren von Stärke erhalten wird. Dieser Prozess führt dazu, dass die Stärkemoleküle quervernetzt oder teilweise aufgelöst werden. Durch kationische Modifikation wird die thermoplastische Eigenschaft der Stärke verstärkt, was zu einer besseren Filmbildung führt. Durch den Einsatz von Oxidationsmitteln wird die Stärke chemisch modifiziert, um ihre Wasseraufnahmefähigkeit zu erhöhen und die Gelbildungseigenschaften zu verbessern. Zudem können bei thermoplastischer Stärke chemische Estergruppen an die Stärkemoleküle gebunden werden, um ihre Wasserlöslichkeit zu beeinflussen. Zudem kann die Stärke mit reaktiven Gruppen versehen werden, um ihre Vernetzungsfähigkeit zu verbessern und die thermoplastischen Eigenschaften zu verstärken.

Ein weiteres Beispiel für ein biologisch abbaubares Polymer ist Polymilchsäure (Polylactid, PLA). Polymilchsäure wird aus pflanzlichen Rohstoffen wie Maisstärke oder Zuckerrohr hergestellt. Polymilchsäure ist biologisch abbaubar und kann unter den Bedingungen einer industriellen, häuslichen und/oder landwirtschaftlichen Kompostierungseinrichtung abgebaut werden.

Polyhydroxyalkanoate (PHA) werden von Bakterien synthetisiert, sind also biologischen Ursprungs, können aber als oligomere Polylactone auch synthetisch erzeugt werden, wobei hier, abhängig von der Kettenlänge, auch wasserlösliche PHA's zur Verfügung stehen.

Weitere Beispiele für biologisch abbaubare Polymere sind Polybutylene Succinat (PBS) und Polybutylene Adipat Terephthalat (PBAT).

Gemäß einer bevorzugten Ausführungsform der vorliegenden Erfindung umfasst das Polymermaterial 50 bis 98 Gew%, vorzugsweise 60 bis 95 Gew%, noch mehr bevorzugt 70 bis 90 Gew%, noch mehr bevorzugt 75 bis 90 Gew%, der Polymermatrix.

Gemäß einer bevorzugten Ausführungsform der vorliegenden Erfindung das Polymermaterial mindestens ein Schichtsilikat, vorzugsweise 0,5 bis 10 Gew%, noch mehr bevorzugt 1 bis 10 Gew%, noch mehr bevorzugt 1 bis 5 Gew%, noch mehr bevorzugt 2 bis 4 Gew%, des mindestens einen Schichtsilikats, umfasst.

Es hat sich gezeigt, dass ein bestimmter Anteil von Schichtsilikaten (wie z.B. Talkum, Bentonit, Laponit, Montmorillonit, Glimmer) insbesondere bei der Verwendung des erfindungsgemäßen Polymermaterials bei Folien, aber auch bei dickwanddigen Gegenständen/Bauteilen von Vorteil sein kann. Im Produktionsprozess orientieren sich die Plättchen der Schichtsilikate in Längsrichtung und wirken sich dadurch positiv auf die Festigkeit des Polymermaterials aus. Auch die Temperaturbeständigkeit des Polymermaterials bei der Verarbeitung kann durch Schichtsilikate positiv beeinflusst werden. Beim biologischen Abbau zeigte sich, dass der überwiegende Teil der Schichtsilikate, insbesondere Bentonit, Laponit und Montmorillonit mit Wasser zur Quellung und damit zur Sprengung der Polymerstrukturen beitragen kann. Dies kann ebenfalls zu einem beschleunigten biologischen Abbau der Polymermatrix bzw. des Polymermaterials beitragen.

Gemäß einer bevorzugten Ausführungsform der vorliegenden Erfindung ist das mindestens eine Schichtsilikat ausgewählt aus der Gruppe bestehend aus Montmorillonit, Laponit, Talkum, Bentonit und Glimmer.

Gemäß einer bevorzugten Ausführungsform der vorliegenden Erfindung umfasst das Polymermaterial mindestens ein biologisch abbaubares, vorzugsweise funktionelles, Pigment.

Optional umfasst das Polymermaterial Farbpigmente, die nach Möglichkeit ebenfalls biologisch abbaubar sein können bzw. sollen. Idealerweise werden Pigmente eingesetzt, die weder das Polymermaterial negativ beeinflussen noch den biologischen Abbauprozess. Zudem können auch Pigmente eingesetzt werden, die keinen negativen Einfluss auf die Umwelt haben und evtl. sogar als Boden- oder Pflanzenstärkungsmittel dienlich sind.

Beispiele möglicher (biologisch abbaubarer) Pigmente sind Chlorophyll, Curcumin, Betanin, Anthocyanin, Carotinoid, Lycopin, Anthocyanidin, Phycocyanin, Chlorophylloid, Chlorophyllin, Betalain, Indican, Bacteriorhodopsin, C-Phycocyanin, C-Phycoerythrin und Zeaxanthin.

Gemäß einer bevorzugten Ausführungsform der vorliegenden Erfindung umfasst das Polymermaterial 0,05 bis 5 Gew%, vorzugsweise 0,1 bis 5 Gew%, noch mehr bevorzugt 0,1 bis 3 Gew%, noch mehr bevorzugt 0,1 bis 2 Gew%, des mindestens einen Pigments.

Gemäß einer bevorzugten Ausführungsform der vorliegenden Erfindung ist an der Oberfläche des Polymermaterials der mindestens eine nanoporöse Füllstoff und/oder der mindestens eine weitere Füllstoff zumindest teilweise zugänglich.

Um den Abbau des erfindungsgemäßen Polymermaterials, insbesondere der Polymermatrix bzw. des Polymers, zu fördern, sollte das mindestens eine Füllmaterial und/oder das mindestens eine weitere Füllmaterial, insbesondere aber das mindestens eine weitere Füllmaterial, zugänglich sein, damit es entsprechenden Umwelteinflüssen ausgesetzt ist. Die (weitere) Zugänglichmachung des mindestens einen weiteren Füllmaterials kann mit unterschiedlichen Verfahren durchgeführt werden.

Beispielsweise kann durch mechanische Maßnahmen (z.B. durch Aufrauhung) an der Oberfläche des Polymermaterials das mindestens eine weitere Füllmaterial im Polymermaterial zumindest teilweise zugänglich gemacht werden. Alternativ dazu kann das Polymermaterial bestimmten Lösungsmitteln ausgesetzt werden. Das Polymermaterial kann einer energiereichen Plasmaatmosphäre ausgesetzt werden, wodurch das mindestens eine weitere Füllmaterial zugänglich wird. Die Verwendung von Ionenstrahlen ist ebenfalls möglich.

Ein weiterer Aspekt der vorliegenden Erfindung betrifft ein Verfahren zur Herstellung eines biologisch abbaubaren Polymermaterials umfassend die Schritte des Vermengens mindestens eines nanoporösen Füllstoffs und mindestens eines weiteren biologisch abbaubar und/oder wasserlöslich Füllstoffs, wie oben definiert, mit einer Polymermatrix wie ebenfalls oben definiert.

Verfahren zur Herstellung von Polymermaterialien, welche Polymere bzw. eine Polymermatrix und Füllstoffe umfassen sind hinreichend bekannt und umfassen Misch- und Knet- und optionale Granulierungsprozesse zur Gewinnung von Vorstufen für Spritzguss-, Extrusions-, Walz-, Kalandrier-, Folienblas- und Vliesverfahren.

Ein noch weiterer Aspekt der vorliegenden Erfindung betrifft einen Gegenstand umfassend ein Polymermaterial gemäß der vorliegenden Erfindung wie oben ausgeführt.

Das erfindungsgemäße Polymermaterial kann jegliche erdenkliche Form gebracht werden und ist somit zur Herstellung von Gegenständen geeignet, welche auch aus herkömmlichen Polymermaterialien hergestellt werden können. Idealerweise umfassen insbesondere solche Gegenstände das erfindungsgemäße Polymermaterial, welche tendenziell bzw. unbeabsichtigt und praktisch unvermeidbar in die Umwelt, insbesondere in das Erdreich oder ins Wasser, gelangen (z.B. Wegwerfgegenstände wie Behältnisverschlüsse) .

Gemäß einer bevorzugten Ausführungsform der vorliegenden Erfindung der Gegenstand ein Verpackungsgegenstand, ein Behälter für Lebensmittel und/oder Nichtlebensmittel, ein Landwirtschaftsgegenstand und/oder ein Gartenbaugegenstand ist.

Bevorzugte Gegenstände sind Behälter für Lebensmittel und Nichtlebensmittel, Rasen- oder Gartenausrüstung, Gartenbauprodukte, Landwirtschaftsprodukte, Anzuchttöpfe, Urnen, Kabelbinder, Schnellbinder, Unkrautvlies, Erntenetze, Rindenschutz, Fraßschutz, Verbissschutz, Baumstammschutz und dergleichen. Vor allem im Gartenbau und in der Landwirtschaft können Gegenstände mit dem erfindungsgemäßen Polymermaterial sehr gut eingesetzt werden. Beispielsweise können Pflanztöpfe, Anzuchttöpfe und Wurzelschutznetze aus dem erfindungsgemäßen Polymermaterial direkt in die Erde eingebracht werden, wo diese im Laufe der Zeit abgebaut werden. Auch Befestigungsmaterialen mit denen die Äste von Bäumen, Reben und Sträuchern befestigt werden, können aus dem erfindungsgemäßen Polymermaterial hergestellt werden oder dieses umfassen.

Das erfindungsgemäße biologisch abbaubare Polymermaterial kann in einer bevorzugten Ausführungsform auch zur Herstellung von Feuerwerkskörpern bzw. Teilen davon eingesetzt werden. Viele Feuerwerkskörper bzw. Teile davon bestehen nämlich aus Kunststoffverbindungen wie Polyethylen oder Polypropylen, die nicht biologisch abbaubar sind. Der äußere Behälter von Feuerwerkskörpern besteht normalerweise aus Kunststoff. Die Endkappe eines Feuerwerkskörpers, die oft als Verschluss auf dem Rohr dient, kann ebenfalls aus Kunststoff bestehen. Da verbrauchte Feuerwerkskörper praktisch nie eingesammelt werden, können vor allem diese Kunststoffteile sehr lange in der Umwelt verbleiben und damit zum Müllproblem beitragen. Durch die Verwendung des erfindungsgemäßen Polymermaterials kann die Umweltbelastung durch Feuerwerkskörper signifikant reduziert werden.

Der erfindungsgemäße Gegenstand kann auch ein Verbundmaterial sein, welches neben mindestens einer Schicht oder Folie vom erfindungsgemäßen biologisch abbaubaren Polymermaterial andere Schichten auf ebenfalls biologisch abbaubaren Polymeren, wie beispielsweise Cellulose, Stärke und Derivate davon, umfassen.

Die vorliegende Erfindung wird anhand der folgenden Beispiele näher erläutert, ohne jedoch auf diese beschränkt zu sein.

### BEISPIELE

Die jeweiligen Zusammensetzungen der folgenden Beispiele wurden vorab mit einer Compoundieranlage, welche Vakuumentgasungszonen entlang der Compoundierschneckenzonen aufweist, granuliert. Das erhaltene Granulat wurde vor der weiteren Verarbeitung (Spritzguss, Extrusion usw.) 6 h bei 40 bis 50°C vorgetrocknet und unmittelbar daran anschließend, verarbeitet.

Mittels Spritzgussverfahren wurde jeweils ein konischer Pflanzenkultivierbecher in den folgenden Maßen hergestellt:
d/U: 45 mm, d/O: 60 mm
Höhe: 57 mm
Wandstärke: 1 mm
Gewicht (abhängig von der Zusammensetzung) 10,4-13,5 g

Mittels Extrusionsverfahrens wurde ein im Querschnitt trapezförmiger Pflanzenaufbindestab mit den folgenden Maßen hergestellt:
a = 6 mm
c= 4 mm
h = 4,5 mm, entsprechend einem Volumen von 22,5 cm³/lfm Stab

Somit (abhängig von der Zusammensetzung) betrug das Metergewicht 30-36 g.

Die Kompostierbarkeit wurde in einer ersten Phase der vergleichenden Beurteilung in Anlehnung an DIN EN ISO 20 200 durchgeführt, somit der Zersetzungsgrad bei genormten Bedingungen nach 30, 60 und 90 Tagen ermittelt.

Diese Untersuchungen dienen der Darstellung des erfindungsgemäßen Konzepts zur Verbesserung der Kompostierbarkeit von biologisch abbaubaren Kunststoffen.

### Formulierungen:

1) Polymermatrix (A1, 11 - 13) Charakterisierung und Mengenanteil
2) Nanoporöser Füllstoff (A 1 - 5) Charakterisierung und Mengenanteil
3) Weiterer Füllstoff (A 1, 6 - 10) Charakterisierung und Mengenanteil

In den Vergleichsbeispielen 1 bis 5 wurden kommerziell erhältliche Fertiggranulate mit dem Hinweis "Biolog.abbaubar/kompostierbar", ohne der Zugabe der erfindungsgemäßen Additive zu den oben beschriebenen Produkten (Becher und Bindestab) verarbeitet.

### Vergleichsbeispiel 1:

| | | | |
|---|---|---|---|
| Thermoplastische Stärke (TPS) | | AGENACOMP F 40 | 100 Gew% |
| Spritzguss: | 130 - 140°C | | |

### Vergleichsbeispiel 2:

| | | |
|---|---|---|
| Polybutylensebacat (PBSeb) | BIOPOL 707 | 100 Gew% |
| Spritzguss: | | 45-65°C |

### Vergleichsbeispiel 3:

| | | |
|---|---|---|
| Polybutylen-adipat-terephthalat (PBAT) | BOIPOL 1160 | 100 Gew% |
| Spritzguss: | | 110-135°C |

### Vergleichsbeispiel 4:

| | |
|---|---|
| Polybutylen-Succinat (PBS) | 100 Gew% |
| Extrusion: | 105-145°C |

### Vergleichsbeispiel 5:

| | | |
|---|---|---|
| Polymilchsäure (PLA) | Nature Plast PLE 005 - A | 100 Gew% |
| Spritzguss: | | 160-180°C |

**Tabelle 1: Prüfung des Zersetzungsgrades der Vergleichsbeispiele (Gewichtsverlust der Probekörper in %, nach 2 mm Sieb)**

| ***Vergleichsbeispiel*** | ***30 Tage*** | ***60 Tage*** | ***90 Tage*** |
|---|---|---|---|
| 1 | 28% | 52% | 88% |
| 2 | 19% | 37% | 61% |
| 3 | 17% | 30% | 50% |
| 4 | 20% | 36% | 64% |
| 5 | 15% | 29% | 48% |

In den Beispielen 1 bis 5 wurden erfindungsgemäße Zusammensetzungen zu den oben beschriebenen Produkten (Becher und Bindestab) verarbeitet.

### Beispiel 1:

| | | |
|---|---|---|
| Matrix: | AGENACOMP F 40 (TPS) | 81 Gew% |
| Nanop. Füllstoff: | Zeolith BIOAFFIN KAD 10 - 4 | 15 Gew% |
| Weitere Füllstoffe: | TENCEL - Cellulose 50µm | 2,5 Gew% |
| | KH₂PO₄ | 1,5 |
| Gew% | | |
| (*Anmerkung:* Zeolith KAD 10 - 4 ist ein natürlicher Klinoptilolith mit ca. 9% Schichtsilikatgehalt (Glimmer, Ton, Klazit)) | | |
| Spritzguss: 155 - 175°C | | |

### Beispiel 2:

| | | | |
|---|---|---|---|
| Matrix: | Biopol 707 (PBSeb) | | 8 Gew% |
| | Biopol 1160 (PBAT) | | 65 Gew% |
| | AGENDCOMP F 40 (TPS) | | 7 Gew% |
| Nanoporöser Füllstoff: | | BIOAFFIN KAD 10 - 4 | 15 Gew% |
| Weitere Füllstoffe: | | KH₂PO₄ | 1,5 Gew% |
| | | Dextrose | 3,5 Gew% |
| Spritzguss: | 160 - 195°C | | |

### Beispiel 3:

| | | |
|---|---|---|
| Matrix: | Ecoflex SL05 (PBAT) | 72 Gew% |
| Nanoporöser Füllstoff: | BIOAFFIN KAD 10 - 4 | 12 Gew% |
| Weitere Füllstoffe: | TENCEL Cellulose 50pm | 12 Gew% |
| Schichtsilikat: Talk | 10pm | 4 Gew% |
| Spritzguss: | 165 - 195°C | |

### Beispiel 4:

| | | |
|---|---|---|
| Matrix: | ECOVIO M 2351 (PLA/PBAT-Blend) | 76% |
| Nanoporöser Füllstoff : | BIOAFFIN KAD 10 - 4 | 18% |
| Weiterer Füllstoff: | Cellulosefaser Kurzschnitt | 1-1,5 mm |
| | | 6 Gew% |
| Extrusion: | 140 - 210°C | |

### Beispiel 5:

| | | | |
|---|---|---|---|
| Matrix: | Naturplast PLE 005 - A (PLA) | | 83 Gew% |
| Nanoporöse Füllstoffe: | | Silicagel 10pm | 6,4 Gew% |
| | | Aktivruß 1µm | 1,2 Gew% |
| | | Zeolith/Klinoptilolith 5pm | 4,4 Gew% |
| Weiterer Füllstoff: | PEG 4000 | | 5,0 Gew% |
| Extrusion: | 135 - 195°C | | |

**Tabelle 2: Prüfung des Zersetzungsgrades der Vergleichsbeispiele (Gewichtsverlust der Probekörper in %, nach 2 mm Sieb)**

| ***Beispiel*** | ***30 Tage*** | ***60 Tage*** | ***90 Tage*** |
|---|---|---|---|
| 1 | 39% | 74% | 96% |
| 2 | 37% | 66% | 91% |
| 3 | 26% | 59% | 90% |
| 4 | 24% | 48% | 86% |
| 5 | 22% | 54% | 85% |

## Patentansprüche

1. Biologisch abbaubares Polymermaterial umfassend eine biologisch abbaubare Polymermatrix, **dadurch gekennzeichnet, dass** die Polymermatrix mindestens einen nanoporösen Füllstoff und mindestens einen weiteren Füllstoff umfasst, wobei der mindestens eine weitere Füllstoff biologisch abbaubar und/oder wasserlöslich ist.

2. Polymermaterial gemäß Anspruch 1, **dadurch gekennzeichnet, dass** der mindestens eine nanoporöse Füllstoff als Partikel vorliegt und vorzugsweise einen D90-Wert von 2 bis 40 µm, vorzugsweise von 2 bis 25 µm, noch mehr bevorzugt von 2 bis 20 µm, noch mehr bevorzugt von 5 bis 20 µm, aufweist.

3. Polymermaterial gemäß Anspruch 1 oder 2, **dadurch gekennzeichnet, dass** der mindestens eine nanoporöse Füllstoff eine Porengröße von 0,2 bis 20 nm, vorzugsweise von 0,3 bis 10 nm, noch mehr bevorzugt von 0,4 bis 5 nm, aufweist.

4. Polymermaterial gemäß einem der Ansprüche 1 bis 3, **dadurch gekennzeichnet, dass** der mindestens eine nanoporöse Füllstoff ein Mineral, vorzugsweise ein Zeolith, noch mehr bevorzugt Klinoptilolith, gefällte Kieselsäure, Aktivkohle oder eine metallorganische Gerüstverbindung umfasst.

5. Polymermaterial gemäß einem der Ansprüche 1 bis 4, **dadurch gekennzeichnet, dass** das Polymermaterial 2 bis 30 Gew%, vorzugsweise 2 bis 25 Gew%, noch mehr bevorzugt 2 bis 20 Gew%, noch mehr bevorzugt 2 bis 15 Gew%, noch mehr bevorzugt 2 bis 10 Gew%, noch mehr bevorzugt 3 bis 8 Gew%, des mindestens einen nanoporösen Füllstoff umfasst.

6. Polymermaterial gemäß einem der Ansprüche 1 bis 5, **dadurch gekennzeichnet, dass** der mindestens eine weitere Füllstoff als Partikel und/oder als Faser vorliegt.

7. Polymermaterial gemäß einem der Ansprüche 1 bis 6, **dadurch gekennzeichnet, dass** der mindestens eine weitere Füllstoff als Partikel vorliegt und einen D90-Wert von 5 bis 100 µm, vorzugsweise von 10 bis 100 µm, noch mehr bevorzugt von 10 bis 50 µm, noch mehr bevorzugt von 5 bis 30 µm, aufweist.

8. Polymermaterial gemäß einem der Ansprüche 1 bis 7, **dadurch gekennzeichnet, dass** der mindestens eine weitere Füllstoff, der biologisch abbaubar und/oder wasserlöslich ist, ausgewählt ist aus der Gruppe der Kohlenhydrate, vorzugsweise ein Monosaccharid, ein Disaccharid, ein Polysaccharid oder ein Derivat davon ist.

9. Polymermaterial gemäß einem der Ansprüche 1 bis 8, **dadurch gekennzeichnet, dass** der mindestens eine weitere Füllstoff, der wasserlöslich ist, ein Phosphat oder ein Sulfat , vorzugsweise ein Natriumphosphat, ein Kaliumphosphat oder ein Ammoniumphosphat, ist.

10. Polymermaterial gemäß einem der Ansprüche 1 bis 9, **dadurch gekennzeichnet, dass** das Polymermaterial 1 bis 20 Gew%, vorzugsweise 1 bis 15 Gew%, noch mehr bevorzugt 1 bis 10 Gew%, noch mehr bevorzugt 1 bis 8 Gew%, noch mehr bevorzugt 2 bis 8 Gew%, des mindestens einen weiteren Füllstoffs umfasst.

11. Polymermaterial gemäß einem der Ansprüche 1 bis 10, **dadurch gekennzeichnet, dass** die biologisch abbaubare Polymermatrix mindestens ein Polymer ausgewählt aus der Gruppe bestehend aus thermoplastischer Stärke, Polymilchsäure, Polybutylsuccinat, Polyhydroxyalkanoate, Poly(butylenadipat-co-terephthalat), Polycaprolactone, Polyalkyenglycole und Copolymeren davon ist.

12. Polymermaterial gemäß einem der Ansprüche 1 bis 11, **dadurch gekennzeichnet, dass** das Polymermaterial 50 bis 98 Gew%, vorzugsweise 60 bis 95 Gew%, noch mehr bevorzugt 70 bis 90 Gew%, noch mehr bevorzugt 75 bis 90 Gew%, der Polymermatrix umfasst.

13. Polymermaterial gemäß einem der Ansprüche 1 bis 12, **dadurch gekennzeichnet, dass** das Polymermaterial mindestens ein Schichtsilikat, vorzugsweise 0,5 bis 10 Gew%, noch mehr bevorzugt 1 bis 10 Gew%, noch mehr bevorzugt 1 bis 5 Gew%, noch mehr bevorzugt 2 bis 4 Gew%, des mindestens einen Schichtsilikats, umfasst.

14. Polymermaterial gemäß einem der Ansprüche 1 bis 13, **dadurch gekennzeichnet, dass** an der Oberfläche des Polymermaterials der mindestens eine nanoporöse Füllstoff und/oder der mindestens eine weitere Füllstoff zumindest teilweise zugänglich ist.

15. Verfahren zur Herstellung eines biologisch abbaubaren Polymermaterials umfassend die Schritte des Vermengens mindestens eines nanoporösen Füllstoffs und mindestens eines weiteren biologisch abbaubar und/oder wasserlöslich Füllstoffs, wie in einem der Ansprüche 2 bis 10 definiert, mit einer Polymermatrix wie in Anspruch 11 oder 12 definiert.

16. Gegenstand umfassend ein Polymermaterial gemäß einem der Ansprüche 1 bis 14.
